# EUROPÄISCHE PATENTSCHRIFT

(11) **EP 0 708 256 B1**
(45) Veröffentlichungstag und Bekanntmachung des Hinweises auf die Patenterteilung: **05.11.1997**
(21) Anmeldenummer: 95113046.7
(22) Anmeldetag: 18.08.1995
(51) Int. Cl.: F16B 12/20

(54) **Verbindungsbeschlag**
Connecting fitting
Ferrure d'assemblage

(30) Priorität: 18.10.1994 DE 4437273
(43) Veröffentlichungstag der Anmeldung: 24.04.1996
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- EP-A- 0 142 710
- EP-A- 0 357 129
- EP-A- 0 507 289
- DE-A- 2 748 272

## Beschreibung

Die Erfindung betrifft einen Verbindungsbeschlag zum lösbaren Verbinden zweier, vorzugsweise rechtwinkelig aufeinander stoßender Möbelteile.

Verbindungsbeschläge zum lösbaren Verbinden von Möbelteilen sind in unterschiedlichen Ausführungsformen bekannt. Derartige Verbindungsbeschläge bestehen entweder aus zwei Beschlagteilen, die vor der Montage mit jedem der zu verbindenden Möbelteile verbunden werden müssen (DE-U-90 00 151), oder sie weisen einen komplizierten Aufbau auf (DE-A-27 48 272). Darüber hinaus lassen sich bekannte Verbindungsbeschläge meist nur mit Hilfe von Werkzeugen montieren.

Aus DE-A-25 46 750 ist ein Beschlagteil mit einem ringförmigen Haltestück und einem radialen schalenförmigen Fortsatz bekannt, dessen äußerer Mantel einen Krümmungsradius besitzt, der dem Radius der Bohrung des anderen Möbelteils, in dem der Fortsatz zu verankern ist, entspricht. In dem schalenförmigen Fortsatz ist ein Spannbolzen eingelegt, der um 180° zu einander versetzt gewindestegförmige Rippen trägt. Durch Drehung des Spannbolzens mittels eines in dessen radialen Bohrungen eingesetzten Hebels lassen sich die gewindestegartigen Rippen derart drehen, daß sie zur Verankerung des schalenförmigen Fortsatzes und des Spannbolzens in der Bohrung einerseits in Nuten des Grundes des schalenförmigen Fortsatzes und andererseits in die Wandung der Bohrung greifen. Ohne spezielles Werkzeug läßt sich dieser bekannt Beschlag nicht montieren.

Aufgabe der Erfindung ist es daher, einen Verbindungsbeschlag der eingangs angegebenen Art zu schaffen, der einen einfachen Aufbau besitzt und sich in einfacher Weise nur von Hand spielfrei montieren läßt.

Erfindungsgemäß wird diese Aufgabe durch einen Verbindungsbeschlag mit den Merkmalen des Anspruchs 1 gelöst.

Der erfindungsgemäße Verbindungsbeschlag zeichnet sich durch einen besonders einfachen Aufbau aus, da er nur aus einem einzigen beweglichen Teil besteht, nämlich einem in dem topfförmigen Gehäuse des Verbindungsbeschlags drehbar gelagerten Bolzen, der verriegelnd mit seinem vorderen, ein exzentrisches Verriegelungsstück tragenden Ende in eine Bohrung des anderen Möbelteils greift. Der erfindungsgemäße Verbindungsbeschlag läßt sich ohne zusätzliches Werkzeug nur von Hand montieren, da zur Verriegelung der beiden Möbelteile nach dem Einführen des mit dem Verriegelungsstück versehenen Endes des Bolzens in die Bohrung des anderen Möbelteils nur ein den Bolzen verdrehender Hebel von Hand umgelegt werden muß. Bei diesem Umlegen führt der Verriegelungsbolzen eine Drehung aus, die dazu führt, daß das exzentrische Verriegelungsstück form- und kraftschlüssig an der Wandung der Bohrung des anderen Möbelteils angreift.

Das Gehäuse ist mit einem das erste Möbelteil überragenden zapfenartigen Fortsatz versehen, dessen Durchmesser dem Durchmesser der Bohrung des zweiten Möbelteils entspricht, wobei der Bolzen in einer Bohrung dieses Fortsatzes gehaltert ist. Die Vormontage des Verbindungsbeschlages erfolgt in der Weise, daß zunächst der zapfenartige Fortsatz des in der Aussparung des ersten Möbelteils befestigten, topfförmigen Gehäuses in die Bohrung des anderen Möbelteils eingeschoben wird. Nach dieser Vormontage wird sodann der Hebel zur Arretierung und Verspannung der beiden Möbelteile umgelegt.

Weiter ist der Bolzen in einer exzentrischen Bohrung des zapfenartigen Fortsatzes gehaltert. Vor der Montage des Verbindungsbeschlages befindet sich der Bolzen in einer Stellung, in der die beiden Exzentrizitäten der Bohrung und des exzentrischen Schaftteils derart zueinander ausgerichtet sind, daß die Scheibe oder das Klemmteil in axialer Draufsicht den zapfenartigen Fortsatz nicht überragt, so daß der zapfenartige Fortsatz behinderungsfrei in das seinem Durchmesser entsprechende Loch des anderen Möbelteils eingesetzt werden kann. Durch Drehung des Bolzens mittels des Betätigungshebels wird dann aufgrund der beiden Exzentrizitäten die Scheibe aus der zylindrischen Hüllkontur des Fortsatzes in radialer Richtung herausbewegt, so daß es kraft- und/oder formschlüssig zur Verankerung des Bolzens an der Wandung des Loches des anderen Möbelteils angreift.

Nach einer besonders bevorzugten Ausführungsform ist vorgesehen, daß die Bohrung der Gehäusewandung über mindestens einen Teil ihrer Länge mit Gewindegängen versehen ist und daß der Bolzen mindestens etwa einen in die Gewindegänge greifenden Gewindesteg aufweist. Durch diese Ausgestaltung ist gewährleistet, daß der Bolzen bei gleichzeitigem arretierenden Eingriff seines exzentrischen Verriegelungsstücks in die Wandung der Bohrung des anderen Möbelteils beide Möbelteile durch seine einschraubende Bewegung zusammenzieht und spannend zusammenhält. Dabei besitzen die den Bolzen einschraubenden Gewindegänge nur eine so große Steigung, daß die erforderliche Selbsthemmung gegeben ist.

Das Gehäuse kann in seinem mittleren Bereich mit einer die Bohrung verbreiternden, nach außen hin offenen Aussparung versehen sein, in der der radiale Hebel angeordnet ist. Die Breite dieser Aussparung bestimmt den Winkel, über den sich der Hebel zwischen seiner Montagestellung und seiner verriegelten Stellung verschwenken läßt. Die Aussparung ist zweckmäßigerweise in der Mitte des Gehäuses angebracht, so daß sie die in den diese begrenzenden, gegenüberliegenden Wänden des Gehäuses befindlichen Bohrungen unterbricht. Zweckmäßigerweise sind beide Bohrungsabschnitte mit Gewindegängen für Gewindestege des Bolzens versehen.

Der Bolzen kann aus zwei Schaftteilen unterschiedlicher Durchmesser bestehen und mit seinem Schaftteil geringeren Durchmessers, der das Verriegelungsstück trägt, die vordere Wandung des Gehäuses bzw. dessen Fortsatz durchsetzen.

Aufgrund üblicher Fertigungstoleranzen ist nicht immer gewährleistet, daß sich der Schwenkhebel derart in seine umgelegte Stellung verschwenken läßt, daß in dieser auch die Verriegelung beider Möbelteile erreicht ist. Um möglichst immer eine gute Verbindung beider Möbelteile zu erreichen, sind die Gewinde so ausgelegt, daß die spannende Verriegelung spätestens mit dem vollständigen Umlegen des Verriegelungshebels, meist aber bei dem Verschwenken über einen kleineren Schwenkwinkel erreicht ist. Um jedoch zu erreichen, daß der Hebel in seiner verriegelten Stellung immer flach an dem Gehäuse anliegt oder teilweise sogar in dieses eintaucht, ist nach einer bevorzugten Ausführungsform vorgesehen, daß der Betätigungshebel mit dem Bolzen durch eine Kupplung verbunden ist. Diese Kupplung ist zweckmäßigerweise so ausgebildet, daß sie nach dem Aufeinanderstoßen und Verspannen der beiden zu verbindenden Möbelteile mit einem vorbestimmten Drehmoment durchrutscht. Eine derartige auf ein vorbestimmtes Drehmoment eingestellte Kupplung kann aus einem mit dem Betätigungshebel verbundenen Ring bestehen, der sich durch eine diese belastende Tellerfeder auf einem Ringbund des Bolzens abstützt. Auf diese Weise läßt sich der Betätigungshebel mit bestimmtem Durchbruchmoment auf dem Bolzen lagern.

Die Kupplung läßt sich in einfacher Weise auch dadurch bewirken, daß der Bolzen im Bereich der Aussparung des Gehäuses mit einer Verzahnung und der Betätigungshebel mit einem den Bolzen einfassenden Ring mit entsprechender Innenverzahnung versehen ist, derart, daß durch axiales Verschieben des Betätigungshebels in der Aussparung dieser in Eingriff und außer Eingriff mit der Verzahnung des Bolzens gebracht werden kann. Bei dieser bevorzugten Ausgestaltung wird zum Zwecke der Montage der Betätigungshebel in Eingriff mit der Verzahnung des Bolzens gebracht, so daß sich dieser zum Zwecke seiner Verriegelung durch den Betätigungshebel verdrehen läßt. Befindet sich der Betätigungshebel am Ende der Verriegelungsdrehung nicht in seiner an dem Gehäuse anliegenden Stellung, kann er durch axiales Verschieben auf dem Bolzen in der Aussparung des Gehäuses so weit verschoben werden, daß er von der Verzahnung des Bolzens freikommt und in seine an dem Gehäuse anliegende Stellung verschwenkt werden kann, so daß er störend oder unschön nicht mehr in Erscheinung tritt. Der verzahnte Bereich des Bolzens befindet sich vorzugsweise auf seinem Abschnitt mit größerem Durchmesser.

Zweckmäßigerweise besteht die Bohrung der hinteren Wandung des Gehäuses aus einer Sacklochbohrung, deren Tiefe so bemessen ist, daß sich der Bolzen auf dem Grund dieser Sacklochbohrung abstützt, wenn dessen Verriegelungsstellung erreicht ist. Durch diese Ausgestaltung ist sichergestellt, daß das exzentrische Verriegelungsstück bei der Verriegelungsdrehung des Bolzens den Wandungsabschnitt der Bohrung des anderen Möbelteils nicht zerstörend ausreißen kann.

Zweckmäßigerweise besteht das Gehäuse aus zwei Gehäusehälften, deren Trennebene durch die Achse der Bohrung verläuft. Die Gehäusehälften können an ihren Trennflächen mit komplementären Zapfen und Bohrungen versehen sein, so daß sie sich durch einfaches Zusammenstecken zu dem Gehäuse montieren lassen. Diese Ausgestaltung des Gehäuses ermöglicht eine einfache Halterung und Lagerung des Bolzens durch Einlegen in die Gehäusehälften vor der Montage. Das Gehäuse bzw. die Gehäusehälften bestehen zweckmäßigerweise aus Kunststoff-Spritzgußteilen.

Der Betätigungshebel kann mit einem Vorsprung versehen sein, mit dem er in der Verriegelungsstellung zu seiner Arretierung in eine entsprechende Aussparung des Gehäuses greift.

In weiterer Ausgestaltung der Erfindung ist vorgesehen, daß der Bolzen einen das Gehäuse überragenden, exzentrischen Schaftteil besitzt, auf den eine mit einem schneidenden Steg versehene Scheibe befestigt ist. Die Scheibe ist zweckmäßigerweise mit mindestens einem schneidenden Gewindegang versehen, so daß der Bolzen bei dem Einschneiden des Gewindeganges in die Wandung der Bohrung des anderen Möbelteils in diese hineingezogen wird.

Ausführungsbeispiele der Erfindung werden nachstehend anhand der Zeichnung näher beschrieben. In dieser zeigt
- Fig. 1: einen Längsschnitt durch eine erste Ausführungsform des Verbindungsbeschlages in seiner Montagestellung an den miteinander zu verbindenden Möbelteilen,
- Fig. 2: eine der Fig. 1 entsprechende Darstellung des Verbindungsbeschlages in seiner die beiden Möbelteile verriegelnden Stellung,
- Fig. 3: eine der Fig. 2 entsprechende Darstellung des Verbindungsbeschlages, in der der Betätigungshebel nach der Verriegelung von dem Bolzen gelöst und in seine Ruhestellung geschwenkt ist,
- Fig. 4: eine Ansicht auf die Trennebenen der beiden ein topfförmiges Gehäuse bildenden Gehäuseteile,
- Fig. 5: eine Draufsicht auf das topfförmige Gehäuse im zusammengefügten Zustand seiner Teile,
- Fig. 6: einen Schnitt durch das Gehäuse längs der Linie VI-VI in Fig. 5,
- Fig. 7: eine Vorderansicht des Verbindungsbeschlages,
- Fig. 8: eine Seitenansicht der ersten Ausführungsform des Bolzens,
- Fig. 9: eine Seitenansicht der Scheibe mit schneidenden Gewindegängen,
- Fig. 10: eine Seitenansicht des Betätigungshebels für den Bolzen nach Fig. 8,
- Fig. 11: einen Schnitt längs der Linie XI-XI durch den Betätigungshebel nach Fig. 10,
- Fig. 12: eine Seitenansicht einer zweiten Ausführungsform des Bolzens mit einstückig mit diesem verbundenen Betätigungshebel und
- Fig. 13: eine Ansicht des Bolzens in Richtung des Pfeils C in Fig. 12.

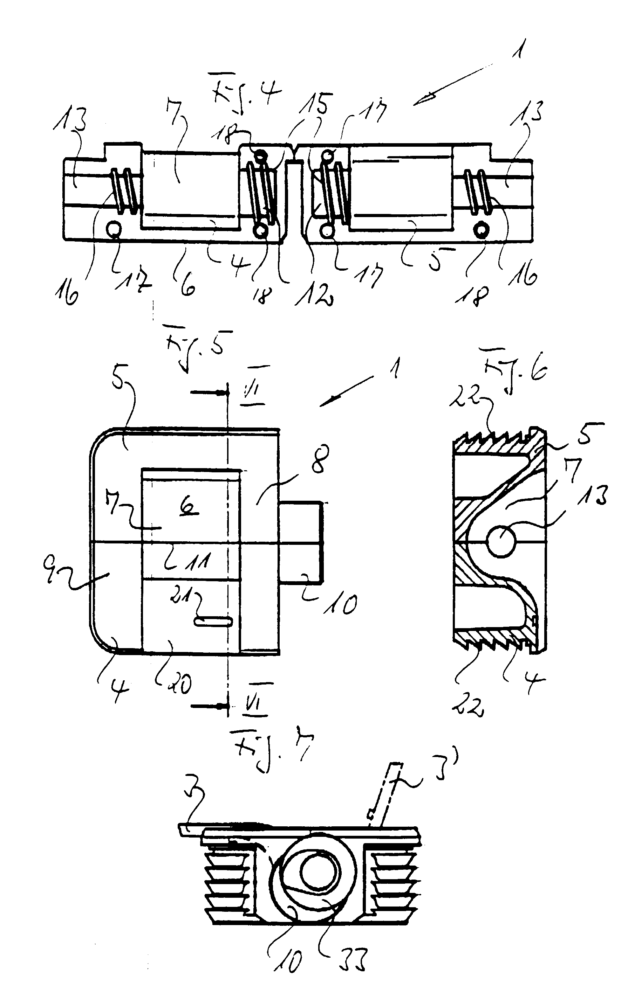

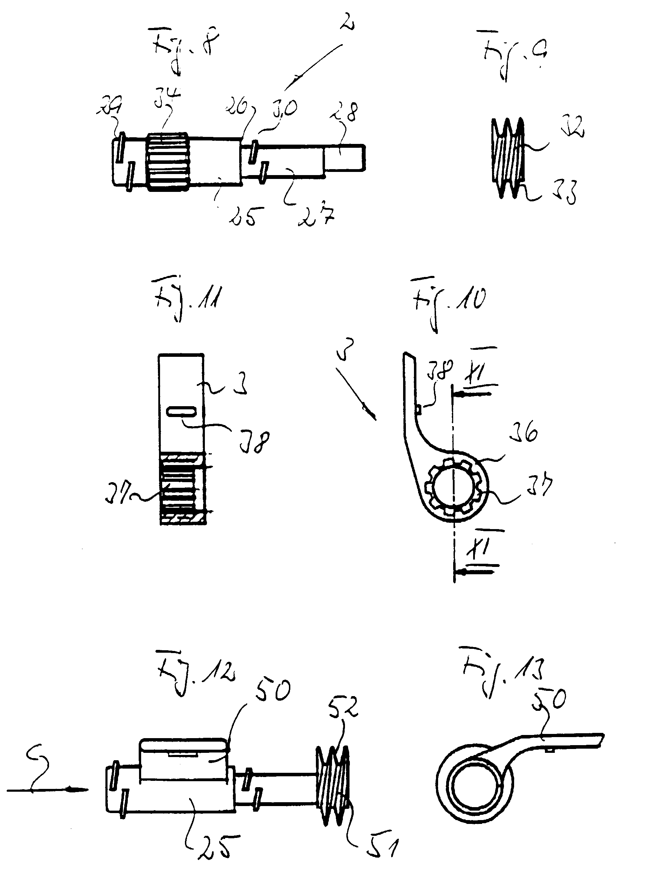

Der Verbindungsbeschlag besteht aus einem am besten aus den Fig. 4 bis 7 ersichtlichen Gehäuse und aus einem in diesem drehbar gelagerten und über einen begrenzten Schwenkwinkel durch einen Hebel 3 verdrehbaren Bolzen 2, der am besten aus den Fig. 8 bis 10 ersichtlich ist.

Das Gehäuse 1 ist aus zwei Gehäusehälften 4, 5 zusammengesetzt und besitzt eine im wesentlichen topfförmige Form. Das Gehäuse weist eine mittlere nach oben hin offene und nach unten hin durch einen Boden 6 begrenzte im wesentlichen rechteckige Aussparung auf, die zwischen einer vorderen Wandung 8 und einer hinteren Wandung 9 gebildet ist. Die vordere Wandung 8 weist in ihrem mittleren Bereich einen zapfenartigen Fortsatz 10 auf. Das Gehäuse ist in seiner Mittelebene 11 mit einer Bohrung versehen, und zwar einer Sacklochbohrung 12 in dem hinteren Wandungsteil, die mit einer Durchgangsbohrung 13 geringeren Durchmessers in der vorderen Wandung 8 und dem mit dieser einstückig verbundenen zapfenartigen Fortsatz 10 fluchtet. In die Bohrungen 12, 13 sind jeweils in der aus Fig. 4 ersichtlichen Weise zwei Gewindegänge 15, 16 eingearbeitet. Das Gehäuse 1 weist an den in der Mittelebene 11 liegenden Trennebenen Zapfen 17 und entsprechend komplementäre Bohrungen 18 auf, so daß die aus Fig. 4 ersichtlichen Gehäusehälften einfach zu dem aus den Fig. 5 und 6 ersichtlichen Gehäuse zusammengefügt werden können.

Die Aussparung 7 des Gehäuses 1 ist durch seitliche Wandungen begrenzt. Die aus den Fig. 5 und 6 ersichtliche untere Wandung ist mit einem Ausnehmung 20 und einer langlochartigen Aussparung 21 versehen, die der Aufnahme des Betätigungshebels 3 in seiner Ruhestellung dienen.

Das Gehäuse 1 weist in dem dargestellten Ausführungsbeispiel eine insgesamt etwa rechteckige Form auf und ist an ihren äußeren Wandungen mit der Halterung dienenden verzahnten Rippen 22 versehen.

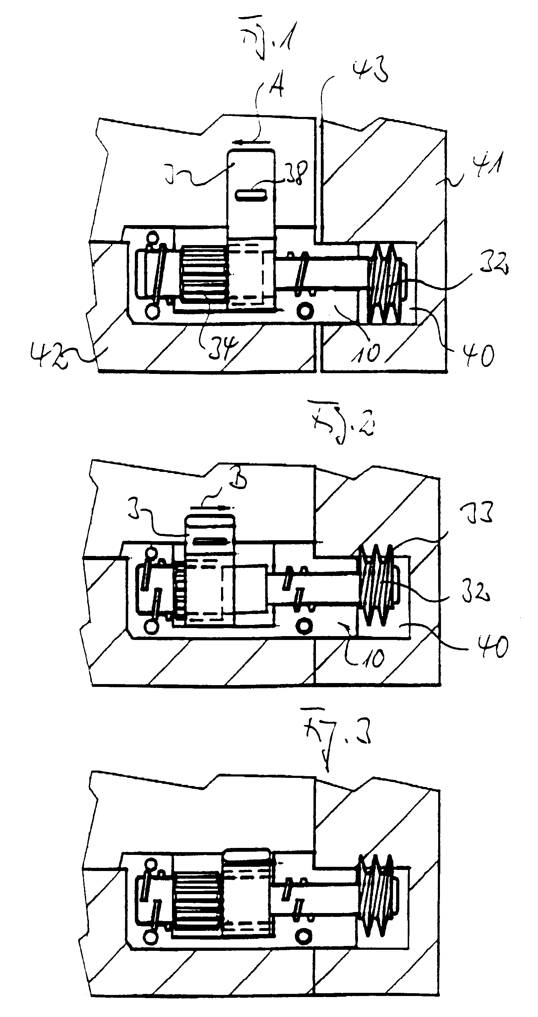

In dem Gehäuse 1 ist in der aus den Fig. 1 bis 3 ersichtlichen Weise der Bolzen 2 gelagert. Der Bolzen 2 besteht aus einem ersten Schaftteil 25, einem mit diesem über eine ringförmige Stufe 26 verbundenen Schaftteil 27 geringeren Durchmessers und einem endseitigen mit diesem verbundenen exzentrischen Schaftteil 28. Die Schaftteile 25 und 27 sind in ihren aus Fig. 8 ersichtlichen linken Endbereichen mit einem Gewindegang 29, 30 versehen. Auf dem exzentrischen Schaftteil 28 ist die Scheibe 32 gehaltert, die mit einer entsprechenden Durchgangsbohrung und zwei schneidenden Gewindegängen 33 versehen ist. Die Scheibe 32 kann dadurch auf dem exzentrischen Schaftteil 28 befestigt sein, daß das Ende dieses Schaftteils vernietet ist.

Das Schaftteil 25 ist einstückig mit einem verzahnten Abschnitt 34 versehen. Auf den Schaftteil 25 ist der Betätigungshebel 3 mit seinem ringförmigen Teil 36 aufgeschoben, das mit einer dem verzahnten Abschnitt 34 entsprechenden Innenverzahnung 37 versehen ist. Zur Montage wird vor der Befestigung der Scheibe der Scheibe 32 auf das Schaftteil 25 der ringförmige Teil 36 des Betätigungshebels 3 aufgeschoben. Der so vorbereitete Bolzen wird sodann in die Gehäusehälften 5, 6 in der Weise eingelegt, daß sich der verzahnte Abschnitt 34 und das ringförmige Teil 36 des Betätigungshebels 3 in der Aussparung 7 befinden. Anschliessend werden die Gehäusehälften unter Einschluß des Bolzens 2 zusammengefügt, so daß die Gewindestege 29, 30 in die Gewindegänge 16, 17 der Bohrungen 13, 12 greifen.

Der Betätigungshebel 3 weist auf seiner Unterseite einen noppenartigen Vorsprung 38 auf, mit dem der Betätigungshebei in seiner Ruhestellung in der Aussparung 21 der Ausnehmung 20 arretiert werden kann.

Die Bohrung 13 in dem zapfenartigen Fortsatz 10 ist exzentrisch angeordnet, so daß der Bolzen 2 in die aus Fig. 1 ersichtliche Stellung gedreht werden kann, in der die Hüllfläche der Gewindegänge der Scheibe 32 mit dem Zapfen 10 fluchtet. In dieser Stellung wird in der aus Fig. 1 ersichtlichen Weise der Zapfen 10 in die Bohrung 40 des anderen Möbelteils 41 eingeschoben, deren Durchmesser dem Durchmesser des zapfenartigen Fortsatzes 10 entspricht. In dieser aus Fig. 1 vormontierten Stellung wird anschließend das mit der Innenverzahnung 37 versehene ringförmige Teil 36 durch axiales Verschieben in Richtung des Pfeils A in Fig. 1 mit ausgeschwenktem Betätigungshebel 3 in Eingriff mit dem verzahnten Abschnitt 34 des Bolzens 2 gebracht. Durch Verschwenken des Betätigungshebels 3 in die aus Fig. 2 ersichtliche Stellung treten einmal die schneidenden Gewindegänge 33 der Scheibe 32 aus der zylindrischen Hüllfläche des zapfenartigen Vorsprungs 10 in der aus Fig. 2 ersichtlichen Weise heraus, so daß sie schneidend an der Innenwandung des vorgebohrten Loches 40 greifen. Gleichzeitig wird durch die Drehbewegung der Bolzen 2 nach links verschoben, weil die Gewindestege 29, 30 in den Gewindegängen der Bohrung eine schraubende Bewegung ausführen. Durch diese Schraubbewegung wird das Möbelteil 41 gegen das Möbelteil Möbelteilen 42 gezogen, so daß der Spalt 43 zwischen den beiden in der aus Fig. 2 ersichtlichen Weise aufgehoben wird. Ist diese Arretierung erfolgt, wird der Betätigungshebel 3 durch axiales Verschieben in Richtung-des Pfeils B in Fig. 2 in eine Lage bewegt, in der er sich neben dem verzahnten Abschnitt 34 in der Aussparung 7 des Gehäuses 1 befindet. In dieser Stellung kann der Betätigungshebel völlig in seine aus Fig. 3 ersichtliche Ruhestellung geklappt werden, in der er in der Aussparung 20 liegt und mit seinem noppenartigen Vorsprung 38 zu seiner Arretierung in die Aussparung 21 greift. Diese montierte Stellung des Verbindungsbeschlages ist aus Fig. 3 ersichtlich.

Der Verbindungsbeschlag läßt sich in einfacher Weise wieder dadurch lösen, daß der Hebel aus seiner Ruhestellung gelöst und mit seinem ringförmigen Teil in Eingriff mit dem verzahnten Abschnitt 34 des Bolzens 2 gebracht wird, so daß sich dieser in seine Öffnungsstellung drehen läßt.

In Fig. 7 ist die der Fig. 1 entsprechende Stellung des Hebels 3' in strichpunktierter Weise dargestellt. Aus dieser Stellung wird die verriegelnde Drehung des Zapfens durch Verschwenken des Hebels in Richtung auf die Ruhestellung 3 bewirkt.

Aus den Fig. 12 und 13 ist eine zweite Ausführungsform des Verbindungsbeschlages ersichtlich, der sich von dem Verbindungsbeschlag nach den Fig. 1 bis 10 nur dadurch unterscheidet, daß der Betätigungshebel 50 einstückig mit dem Schaftteil 25 verbunden ist. Der mit dem Bolzen einstückige Betätigungshebel 50 kann beispielsweise aus Zamak bestehen. Auch die Scheibe 51 mit den schneidenden Gewindegängen 52 kann einstückig mit dem Bolzen ausgebildet sein und ebenso wie dieser aus Zamak bestehen.

## Patentansprüche

1. Verbindungsbeschlag zum lösbaren Verbinden zweier, vorzugsweise rechtwinkelig aufeinander stoßender Möbelteile, bestehend
aus einem in eine Aussparung eines ersten Möbelteils einsetzbaren topfförmigen Gehäuse (1), das mit einem das erste Möbelteil überragenden zapfenartigen Fortsatz (10) versehen ist, dessen Durchmesser dem Durchmesser einer Bohrung (40) eines zweiten Möbelteils (41) entspricht, wobei das Gehäuse mit einer Bohrung (12, 13) versehen ist, die den Fortsatz (10) exzentrisch durchsetzt, und
aus einem in der Bohrung (12, 13) gehalterten Bolzen (2), der an seinem vorderen, den Fortsatz (10) überragenden Ende ein exzentrisches, in eine fluchtende Bohrung (40) des zweiten Möbelteils (41) einführbares Verriegelungsstück (32, 51) aufweist und der mit einem radialen Betätigungshebel (3, 50) versehen ist.

2. Verbindungsbeschlag nach Anspruch 1, dadurch gekennzeichnet, daß die Bohrung (12, 13) in der Gehäusewandung über mindestens einen Teil ihrer Länge mit Gewindegängen (15, 16) versehen ist und daß der Bolzen (2) mindestens etwa einen in die Gewindegänge (15, 16) greifenden Gewindesteg (29, 30) aufweist.

3. Verbindungsbeschlag nach einem der Ansprüche 1 oder 2, dadurch gekennzeichnet, daß das Gehäuse (1) in seinem mittleren Bereich mit einer die Bohrung (12, 13) durchsetzenden, nach außen hin offenen Aussparung (7) versehen ist, in der der radiale Hebel (3, 50) angeordnet ist.

4. Verbindungsbeschlag nach Anspruch 3, dadurch gekennzeichnet, daß die Aussparung (7) die in den diese begrenzenden, gegenüberliegenden Wänden (8, 9) des Gehäuses (1) befindlichen Bohrungsabschnitte (12, 13) unterbricht.

5. Verbindungsbeschlag nach Anspruch 4, dadurch gekennzeichnet, daß beide Bohrungsabschnitte (12, 13) mit Gewindegängen (15, 16) für Gewindestege (29, 30) des Bolzens (2) versehen sind.

6. Verbindungsbeschlag nach einem der Ansprüche 1 bis 5, dadurch gekennzeichnet, daß der Bolzen (2) aus zwei Schaftteilen (25, 27) unterschiedlicher Durchmesser besteht und mit seinem Schaftteil geringeren Durchmessers (27), der das Verriegelungsstück (32, 51) trägt, die vordere Wand (8) des Gehäuses (1) und dessen Fortsatz (10) durchsetzt.

7. Verbindungsbeschlag nach einem der Ansprüche 1 bis 6, dadurch gekennzeichnet, daß der Betätigungshebel (3) mit dem Bolzen (2) durch eine Kupplung verbunden ist.

8. Verbindungsbeschlag nach Anspruch 7, dadurch gekennzeichnet, daß die Kupplung nach dem Aufeinanderstoßen der zu verbindenden Möbelteile bzw. deren Verspannen mit vorbestimmten Drehmomenten durchrutscht.

9. Verbindungsbeschlag nach Anspruch 7, dadurch gekennzeichnet, daß der Bolzen (2) im Bereich der Aussparung (7) des Gehäuses(1) mit einem verzahnten Abschnitt (34) und der Betätigungshebel (3) mit einem den Bolzen einfassenden Ring (36) mit entsprechender Innenverzahnung (37) versehen ist, derart, daß durch axiales Verschieben des Betätigungshebels (3) in der Aussparung (7) dieser Ineingriff und Außereingriff mit dem verzahnten Abschnitt (34) des Bolzens (2) gebracht werden kann.

10. Verbindungsbeschlag nach Anspruch 9, dadurch gekennzeichnet, daß sich die Verzahnung (34) auf dem Abschnitt (25) des Bolzens (2) mit größerem Durchmesser befindet.

11. Verbindungsbeschlag nach einem der Ansprüche 4 bis 10, dadurch gekennzeichnet, daß der Bohrungsabschnitt in der hinteren Wandung (9) des Gehäuses (1) eine Sacklochbohrung (12) ist.

12. Verbindungsbeschlag nach einem der Ansprüche 1 bis 11, dadurch gekennzeichnet, daß das Gehäuse (1) aus zwei Gehäusehälften (5, 6) besteht, deren Trennebene (11) durch die Achse des Bolzens (2) verläuft.

13. Verbindungsbeschlag nach Anspruch 12, dadurch gekennzeichnet, daß die Gehäusehälften (5, 6) an ihren Trennflächen mit komplementären Zapfen (17) und Bohrungen (18) versehen sind.

14. Verbindungsbeschlag nach einem der Ansprüche 1 bis 13, dadurch gekennzeichnet, daß der Betätigungshebel mit einem Vorsprung (38) versehen ist, mit dem er in seiner Verriegelungs- bzw. Ruhestellung zu seiner Arretierung in eine entsprechende Aussparung (21) des Gehäuses (1) greift.

15. Verbindungsbeschlag nach einem der Ansprüche 1 bis 14, dadurch gekennzeichnet, daß der Bolzen einen das Gehäuse überragenden exzentrischen Schaftteil (28) besitzt, auf den eine mit einen schneidenden Steg versehene Scheibe (32) befestigt ist.

16. Verbindungsbeschlag nach Anspruch 15, dadurch gekennzeichnet, daß die Scheibe (32) mit mindestens einem schneidenden Gewindegang (33) versehen ist.

## Claims

1. A connecting fitting for the detachable connection of two furniture parts, preferably abutting on one another at right angles, consisting of
a pot-shaped casing (1) insertable into a recess of a first furniture part and which is provided with a peg-shaped extension (10) projecting beyond the first furniture part, whose diameter corresponds to the diameter of a bore (40) of a second furniture part (41), wherein the casing is provided with a bore (12, 13) which passes eccentrically through the extension (10), and
a pin (2) mounted in the bore (12, 13) and which has at its front end projecting beyond the extension (10) an eccentric locking component (32, 51) insertable into an aligned bore (40) of the second furniture part (41) and which is provided with a radial actuating lever (3, 50).

2. A connecting fitting according to claim 1, characterized in that the bore (12, 13) is provided in the casing wall over at least a portion of its length with threads (15, 16), and that the pin (2) has at least approximately one threaded ridge (29, 30) engaging in the threads (15, 16).

3. A connecting fitting according to one of claims 1 or 2, characterized in that the casing (1) is provided in its median zone with a recess (7) passing through the bore (12, 13) and being open towards the outside, wherein the radial lever (3, 50) is arranged.

4. A connecting fitting according to claim 3, characterized in that the recess (7) interrupts the bore sections (12, 13) situated in the opposed walls (8, 9) of the casing (1) which delimit the recess.

5. A connecting fitting according to claim 4, characterized in that both bore sections (12, 13) are provided with threads (15, 16) for threaded ridges (28, 30) of the pin (2).

6. A connecting fitting according to one of claims 1 to 5, characterized in that the pin (2) consists of two shank portions (25, 27) of different diameters and that it passes, with its shaft portion with the smaller diameter which carries the locking component (32, 51), through the front wall (8) and its extension (10).

7. A connecting fitting according to one of claims 1 to 6, characterized in that the actuating lever (3) is connected to the pin (2) by a coupling.

8. A connecting fitting according to claim 7, characterized in that, after the furniture parts to be joined have abutted on one another or have been braced, the coupling slips at predetermined torques.

9. A connecting fitting according to claim 8, characterized in that, in the zone of the recess (7) of the pasing (1), the pin (2) is provided with a toothed section (34) and the actuating lever (3, 50) is provided with a ring (36) with a corresponding internal tooth system (37) which ring surrounds the pin, in such a way that by the axial displacement of the actuating lever (3, 50) in the recess (7) the lever can brought into engagement and disengagement with the toothed section (34) of the pin (2).

10. A connecting fitting according to claim 9, characterized in that the toothed section (34) is situated on the portion (25) of the pin (2) with the larger diameter

11. A connecting fitting according to one of claims 4 to 10, characterized in that the bore section in the rear wall (9) of the pasing (1) is a blind bore (12).

12. A connecting fitting according to one of claims 1 to 11, characterized in that the casing (1) consists of two casing halves (5, 6) whose plane of separation extends through the axis of the pin (2).

13. A connecting fitting according to claim 12, characterized in that the casing halves (5, 6) are provided at their planes of separation with complementary pegs (17) and bores (18).

14. A connecting fitting according to one of claims 1 to 13, characterized in that the actuating lever is provided with a projection (38) by means of which it engages in its locking position or rest position in a corresponding recess (21) for its locking.

15. A connecting fitting according to one of claims 1 to 14, characterized in that the pin has an eccentric shank portion (28) projecting beyond the casing, whereon there is secured a stub (3) provided with a cutting edge.

16. A connecting fitting according to claim 15, characterized in that the stub (32) is provided with at least one cutting thread (33).

## Revendications

1. Ferrure d'assemblage pour l'assemblage amovible de deux parties de meuble réunies de préférence à angle droit, comportant un boîtier en forme de pot (1) pouvant être placé dans un évidement de la première partie de meuble et qui est pourvu d'un prolongement (10) en forme d'ergot faisant saillie sur la première partie de meuble dont le diamètre correspond au diamètre d'un perçage (40) d'une deuxième partie de meuble (41), le boîtier étant pourvu d'un perçage (12, 13) qui traverse le prolongement (10) de manière excentrique et un boulon (2) logé dans le perçage (12, 13) qui présente à son extrémité avant faisant saillie sur le prolongement (10) une pièce de verrouillage (32, 51) excentrique pouvant être introduite dans un perçage aligné (40) de la deuxième partie de meuble (41) et qui est pourvue d'un levier d'actionnement radial (3, 50).

2. Ferrure d'assemblage selon la revendication 1, caractérisée en ce que le perçage (12, 13) est pourvu dans la paroi de boîtier, sur au moins une partie de sa longueur, de filetage (15, 16) et en ce que le boulon (2) présente au moins à peu près une nervure de filetage (29, 30) s'engageant dans les filetages (15, 16).

3. Ferrure d'assemblage selon l'une des revendications 1 ou 2, caractérisée en ce que le boîtier (1) est pourvu dans sa zone centrale d'un évidement (7) ouvert vers l'extérieur, traversant le perçage (12, 13) et dans lequel est disposé le levier radial (3, 50).

4. Ferrure d'assemblage selon la revendication 3, caractérisée en ce que l'évidement (7) interrompt les tronçons de perçage (12, 13) se trouvant dans les parois opposées (8,9) du boîtier (1) et délimittant celui-ci.

5. Ferrure d'assemblage selon la revendication 4, caractérisée en ce que les deux tronçons de perçage (12, 13) sont pourvus de filetages (15, 16) pour les nervures de filetage (29, 30) du boulon (2).

6. Ferrure d'assemblage selon l'une des revendications 1 à 5, caractérisée en ce que le boulon (2) est constitué de deux parties de tige (25, 27) d'un diamètre différent et traverse avec sa partie de tige d'un diamètre plus petit (27) qui porte la pièce de verrouillage (32, 51), la paroi avant (8) du boitier (1) et le prolongement (10) de celui-ci.

7. Ferrure d'assemblage selon l'une des revendications 1 à 6, caractérisée en ce que le levier d'actionnement (3) est relié au boulon (2) par un accouplement.

8. Ferrure d'assemblage selon la revendication 7, caractérisée en ce que l'accouplement, après la rencontre des parties de meuble à relier et, respectivement la mise sous tension de celles-ci glisse selon des couples de rotation prédéterminés.

9. Ferrure d'assemblage selon la revendication 7, caractérisée en ce que le boulon (2) est pourvu au voisinage de l'évidement (7) du boîtier (1) d'un tronçon denté (34) et le levier d'actionnement (3) d'une bague (36) entourant le boulon d'une denture intérieure correspondante (37) de telle sorte que par un déplacement axial du levier d'actionnement (3) dans l'évidement (7), celui-ci peut être mis en et hors prise avec le tronçon denté (34) du boulon (2).

10. Ferrure d'assemblage selon la revendication 9, caractérisée en ce que la denture (34) se trouve sur le tronçon (25) du boulon (2) présentant le plus grand diamètre.

11. Ferrure d'assemblage selon l'une des revendications 4 à 10, caractérisée en ce que le tronçon de perçage, dans la paroi arrière (9) du boîtier (1), est un trou borgne (12).

12. Ferrure d'assemblage selon l'une des revendications 1 à 11, caractérisée en ce que le boîtier (1) est constitué de deux moitiés de boîtier (5, 6) dont le plan de séparation (11) passe à travers l'axe du boulon (2).

13. Ferrure d'assemblage selon la revendication 12, caractérisée en ce que les moitiés de boîtier (5, 6) sont pourvues à leurs surfaces de séparation d'ergots complémentaires (17) et de perçages (18).

14. Ferrure d'assemblage selon l'une des revendications 1 à 13, caractérisée en ce que le levier d'actionnement est pourvu d'une saillie (38) avec laquelle il s'engage dans sa position de verrouillage et, respectivement de repos, en vue de son blocage, dans un évidement correspondant (21) du boîtier (1).

15. Ferrure d'assemblage selon l'une des revendications 1 à 14, caractérisée en ce que le boulon comporte une partie de tige excentrique (28) faisant saillie sur le boîtier sur laquelle est fixé un disque (32) présentant une nervure de coupe.

16. Ferrure d'assemblage selon la revendication 15, caractérisée en ce que le disque (32) est pourvu d'au moins un filetage de coupe (33).
